## Europäisches Patentamt
## European Patent Office
## Office européen des brevets

(19)

(11) Veröffentlichungsnummer: **0 150 244**
**B1**

(12) **EUROPÄISCHE PATENTSCHRIFT**

(45) Veröffentlichungstag der Patentschrift:
**21.09.88**

(51) Int. Cl.⁴: **C 22 C 33/00,** C 21 C 5/00

(21) Anmeldenummer: **84100912.9**

(22) Anmeldetag: **28.01.84**

(54) Verfahren zur Herstellung von Stählen aus durch wenigstens eines der Elemente Chrom, Kupfer, Molybdän und Nickel verunreinigtem Stahlschrott.

(43) Veröffentlichungstag der Anmeldung:
**07.08.85 Patentblatt 85/32**

(45) Bekanntmachung des Hinweises auf die Patenterteilung:
**21.09.88 Patentblatt 88/38**

(84) Benannte Vertragsstaaten:
**AT BE CH DE FR GB IT LI LU NL SE**

(56) Entgegenhaltungen:
**US-A-3 682 711**

**"The making, shaping and treating of steel",** 9. Auflage, 1971, Seite 1128, United States Steel Corp., Pittsburgh, USA;
C.W. WEGST: **"Stahlschlüssel",** 10. Auflage, 1974, Seiten 83,84, Verlag Stahlschlüssel Wegst KG, Marbach-Neckar, DE;
Phil. Trans R. Soc. London, A 295, 1980, pages 69-85

**Die Akte enthält technische Angaben, die nach dem Eingang der Anmeldung eingereicht wurden und die nicht in dieser Patentschrift enthalten sind.**

(73) Patentinhaber: **VEB Stahl- und Walzwerk "Wilhelm Florin" Hennigsdorf, Veltener Strasse, DDR- 1422 Hennigsdorf (DD)**

(72) Erfinder: **Welfle, Kurz, Dipl.- Ing., Paul- Schreier- Platz 4, DDR- 1442 Hennigsdorf (DD)**

(74) Vertreter: **Patentanwälte Beetz sen. - Beetz jun. Timpe - Siegfried - Schmitt- Fumian, Steinsdorfstrasse 10, D-8000 München 22 (DE)**

EP 0 150 244 B1

**Beschreibung**

Die Erfindung betrifft ein Verfahren zur Herstellung von Stählen, die warmgewalzt unbehandelt, bevorzugt aus der Walzhitze wärmebehandelt verwendet werden und die erhöhten Anforderungen an die Schweißeignung und an die Streubreite der Festigkeits- und Plastizitätseigenschaften erfüllen. Die Erfindung ist in der Metallurgie bei der Erschmelzung von Stählen, bevorzugt bei hohen Schrott - zu Roheisen - Verhältnissen im Einsatz anwendbar.

Der Gebrauchswert von hochwertigen Stählen wird im wesentlichen vom Festigkeitsniveau, der Schweißeignung und den Plastizitätseigenschaften bestimmt. Das Festigkeitsniveau, insbesondere die Streckgrenze bildet in vielen Fällen die Grundlage für die Höhe der ertragbaren Beanspruchung und damit für die Ausnutzbarkeit des Stahles. Die Schweißeignung sichert rationelle Verbindung des Stahles zu Konstruktionselementen, und die Plastizitätseigenschaften dürfen im Grundwerkstoff und in allen Verarbeitungszuständen bestimmte Mindestwerte nicht unterschreiten, um in extremen Beanspruchungszuständen, wie Schlag und Kälte, Sprödbruch zu vermeiden.

Die Eigenschaften Festigkeit, Plastizität und Schweißeignung besitzen die Stähle auf Grund ihrer chemischen Zusammensetzung und des Herstellungsverfahrens. In der Regel bewirken chemische Zusammensetzungen, die zu hohen Festigkeiten führen, gleichzeitig eine Verschlechterung der Plastizität und der Schweißeignung. In diesem Zusammenhang sind unter chemischer Zusammensetzung nicht nur die Stahlbegleit- und die absichtlich zugegebenen Desoxydations- und Legierungselemente zu berücksichtigen, sondern auch Spuren- und Legierungselemente wie Cr, Cu, Mo und Ni, die im Stahl enthalten sind und in ihrer Summe einen Einfluß auf die Eigenschaften ausüben. Je weniger sich von Schmelze zu Schmelze die Gehalte an Legierungselementen verändern, umso geringer ist die Streubreite der Eigenschaften, deren Mindest- oder Höchstwerte in den Standards verankert sind. Bei erhöhten Anforderungen an die Schweißeignung oder zur Begrenzung der Streuung der Festigkeits- und Plastizitätseigenschaften im angelieferten oder verarbeiteten Zustand werden in den Standards bei verschiedenen Stahlmarken, z. B. TGL 7960 und TGL 12530, nicht nur die Elemente C, Si, Mn, P und S, die vorrangig die zu gewährleistenden Eigenschaften bestimmen, quantitativ begrenzt, sondern es werden darüber hinaus Maximalgehalte für Cr, Cu, Mo und Ni festgelegt. Diese Spuren- und Legierungselemente gelangen zufällig und unkontrollierbar aus bzw. mit dem Stahlschrott oder anderen Ausgangsstoffen in die flüssige Schmelze.

In der Fachliteratur, nämlich "Phil. Trans R. Soc. Lond." A 295, 69 - 85 (1980) wird bei C-Mn- und C-Mn-B-Baustählen auf die Notwendigkeit hingewiesen, bei erhöhten Gehalten der Spuren- und Legierungselemente Cr, Mo, Ni und Cu den Gehalt von C und/oder Mn zu reduzieren, um die zu gewährleistenden Härtbarkeitsgrenzen zu sichern, wobei jedoch keine quantitativen Angaben dazu gemacht werden.

Bekannt ist weiterhin aus der US-A-3 682 711 für warmgewalzte, naturharte Stähle die Bewertung des Legierungsanteilseinflusses von Cr, Mo, Ni und Cu mit einer Legierungsäquivalentformel

$$\text{A.E.F.} = \%C + \frac{\%Mn}{X} + \frac{\%Cr + Mo}{Y} + \frac{\%Ni + \%Cu}{Z} + \frac{\%Si}{Y} + \%V + \%Nb,$$

worin X = 4,5 - 7,5; Y = 4 - 6; Z = 12 - 18, um mit deren Hilfe die angestrebte Festigkeit des Endprodukts innerhalb einer bestimmten Streubreite einzustellen und Verarbeitungsschwierigkeiten, die durch zu hohe Festigkeit verursacht werden, zu vermeiden. Wie das konkrete Ausführungsbeispiel zeigt, werden dabei aber nur Veränderungen von Cr, Mo, Ni und Cu innerhalb der zulässigen Maximalgrenzen der Stahlsorte berücksichtigt, und die Anwendung des Verfahrens wird ausdrücklich auf warmgewalzte, naturharte Stahlprodukte beschränkt, die keiner nachfolgenden Wärmebehandlung zur Veränderung der Eigenschaften unterworfen werden.

Die notwendige Begrenzung des Maximalgehaltes von Cr, Cu, Mo und Ni bzw. der Maximalsumme, wenn mehrere der genannten Elemente gleichzeitig vorhanden sind, verursacht im Schmelzbetrieb Störungen derart, daß nach dem Vorliegen der Einlaufanalyse evtl. Änderungen im Produktionsprogramm vorgenommen werden müssen, beim Strangguß der Sequenzguß mit Verlusten verbunden ist, auf Stahlmarken mit verminderten Anforderungen an die Legierungsreinheit ausgewichen werden muß und sogar vereinzelt die Schmelze als Schrott eingestuft werden muß.

Das Ziel der Erfindung besteht in der Verarbeitung von mit Cr, Cu, Mo und Ni verunreinigtem Stahlschrott, wobei Änderungen des Schmelzprogramms in großem Umfang sowie Ausfall- und Störzeiten im Produktionsprozeß vermieden werden und beim Stranggießen mit den neuen Stählen der Sequenzguß für eine bestimmte Stahlmarke ohne Einschränkungen durchführbar ist. Mit Hilfe der Erfindung sollen Abwertungen auf Stahlmarken mit herabgesetzten Anforderungen bezüglich der Maximalgehalte der genannten Elemente größtenteils entfallen und in bestimmtem Umfang Ferro-Si- und Ferri-Mn-Einsparungen eintreten.

Der Erfindung liegt die Aufgabe zugrunde, ein Verfahren zu entwickeln, mit dem ein Verarbeiten von Flüssigstahl mit überhöhten Gehalten an Cr, Cu, Mo und Ni zu hochwertigem Stahl mit gleichmäßigen Gebrauchs- und Verarbeitungseigenschaften im warmgewalzt unbehandelten, vorzugsweise im aus der Walzhitze wärmebehandelten Zustand entsprechend den Anforderungen des Standards möglich ist.

Gegenstand der Erfindung, womit diese Aufgabe gelöst wird, ist ein Verfahren zur Herstellung von Stählen, die aus der Walzhitze wärmebehandelt erhöhte Anforderungen an die Schweißeignung und an die Streubreite der Festigkeits- und Plastizitätseigenschaften erfüllen, wobei die zufällig und unkontrollierbar aus bzw. mit dem Stahlschrott oder anderen Ausgangsstoffen in die Schmelze gelangten Spuren- und Legierungselemente Cr, Cu, Mo und Ni entsprechend ihrem Legierungswirkwert auf die Streckgrenze und auf die Schweißeignung gezielt zur Reduzierung der normalen, technologisch vorgesehenen Legierungszugabe an Si und/oder Mn genutzt werden, dergestalt, daß nur die Differenzen zwischen dem bei der Einlaufanalyse festgestellten Gehalt an [Cr], [Cu], [Mo] oder [Ni] und dem statistischen Mittelwert $\bar{Cr}$, $\bar{Cu}$, $\bar{Mo}$ oder $\bar{Ni}$ des Elementes in den Einlaufanalysen der betreffenden Stahlmarke zur Reduzierung der Legierungszugabe von Si und Mn verwendet werden, indem sie mit den Beziehungen

$$Si = ([Cr] - \bar{Cr}) + ([Cu] - \bar{Cu}) + 2,9 \, ([Mo] - \bar{Mo}) + 0,6 \, [Ni] - \bar{Ni}),$$

$$Mn = 0,7 \, ([Cr] - \bar{Cr}) + 0,7 \, ([Cu] - \bar{Cu}) + 2,0 \, ([Mo] - \bar{Mo}) + 0,4 \, ([Ni] - \bar{Ni})$$

berechnet wird, wobei die folgenden statistischen Mittelwerte als Grenzwerte anzuwenden sind

$$\bar{Cr} \leq 0,15 \, \%, \; \bar{Cu} \leq 0,15 \, \%, \; \bar{Mo} \leq 0,01 \, \% \text{ und } \bar{Ni} \leq 0,07 \, \%,$$

und daß die Reduzierung von Si und Mn im Stahl nur bis zu den unteren Gehalten vorgenommen wird, die erfahrungsgemäß den vorgesehenen Beruhigungsgrad und ein fehlerfreies Gießen sichern, und bei noch darüber hinaus vorliegenden Restgehalten an Cr, Cu, Mo oder Ni der mittlere angestrebte Kohlenstoffgehalt der Stahlsorte um einen Betrag entsprechend den Beziehungen des Kohlenstoffäquivalents

$$C_{\bar{A}} = C + \frac{Mo}{4} + \frac{Cr}{5} + \frac{Mn}{6} + \frac{Cu}{13} + \frac{Ni}{15} + \frac{P}{2}$$

vermindert wird.

Die Erfindung soll nachstehend anhand eines Ausführungsbeispiels näher erläutert werden.

In den Beziehungen

$$\Delta Si = ([Cr] - \bar{Cr}) + ([Cu] - \bar{Cu}) + 2,9 \, ([Mo] - \bar{Mo}) + 0,6 \, [Ni] - \bar{Ni}),$$

$$\Delta Mn = 0,7 \, ([Cr] - \bar{Cr}) + 0,7 \, ([Cu] - \bar{Cu}) + 2,0 \, ([Mo] - \bar{Mo}) + 0,4 \, ([Ni] - \bar{Ni})$$

bedeuten.

$\Delta Si$, $\Delta Mn$ die Verminderung der normalen technologischen Legierungszugabe

[Cr], [Cu], [Mo], [Ni] die festgestellten Gehalte in der Einlaufanalyse

$\bar{Cr}$, $\bar{Cu}$, $\bar{Mo}$, $\bar{Ni}$ die statistischen Mittelwerte in den Einlaufanalysen.

Bei drei Schmelzen, die in der Einlaufanalyse mit überhöhten Cr-, Cu- und Ni-Gehalten angefallen sind, wurde der Gesamtlegierungsgehalt an C, Si, Mn, Cr, Cu, Mo und Ni nach den erfindungsgemäßen Merkmalen für den termisch verfestigten Betonstahl St T-IV nach TGL 12530/08 eingestellt. Die Schmelzanalyse lieferte die in Tafel 1 angegebenen Werte. Durch eine Senkung des Kohlenstoffgehaltes wurden Kohlenstoffäquivalenten nach TGL 14913

$$C_{\bar{A}} = C + \frac{Mo}{4} + \frac{Cr}{5} + \frac{Mn}{6} + \frac{Cu}{13} + \frac{Ni}{15} + \frac{P}{2}$$

erreicht, die der chemischen Zusammensetzung von St T-IV nach TGL 12530/08 für die Nenndurchmesser 16 bis 32 mm entsprechen.

Aus den drei Schmelzen wurde gerippter Betonstahl von 20 mm Ø gewalzt und aus der Walzhitze wärmebehandelt, d. h. thermisch verfestigt. Die Prüfung des Materials im Zug- und im Faltversuch ergab die in Tafel 2 enthaltenen mechanisch technologischen Eigenschaften. Die drei Ausführungsbeispiele weisen Eigenschaften auf, die die Forderungen an thermisch verfestigten Betonstahl St T-IV hinsichtlich Streckgrenze, Zugfestigkeit, Bruchdehnung und Faltversuch mit ausreichender Sicherheit erfüllen. Eine informatorische Überprüfung der Schweißeignung lieferte positive Ergebnisse.

**0 150 244**

**Tafel 1:** Chemische Zusammensetzung der Schmelzanalyse nach TGL 12530/08 von St T-IV
mit Nenndurchmesser 20 mm und für Ausführungsbeispiele Stahl 1 bis 3

| Stahl-Nr. | C | Si | Mn | P | S | Cr | Cu | Mo | Ni | Kohlenstoff-äquivalent $C_{\bar{A}}$ nach TGL 14913 |
|---|---|---|---|---|---|---|---|---|---|---|
| St T-IV TGL | 0,20 bis 0,26 | 0,25 bis 0,55 | 0,80 bis 1,10 | 0,050 | höchstens 0,050 | 0,30 | 0,30 | 0,10 | 0,30 | 0,37 bis 0,60 |
| Beispiel 1: | 0,14 | 0,19 | 0,61 | 0,045 | 0,034 | 0,87 | 0,36 | 0,07 | 0,46 | 0,51 |
| Beispiel 2: | 0,14 | 0,13 | 0,59 | 0,023 | 0,027 | 0,49 | 0,36 | 0,08 | 0,31 | 0,42 |
| Beispiel 3: | 0,15 | 0,19 | 0,66 | 0,046 | 0,036 | 0,28 | 0,47 | 0,05 | 0,28 | 0,41 |

**Tafel 2:** Mechanisch technologische Eigenschaften von thermisch verfestigtem Betonstahl 20 mm Ø
St T-IV nach TGL 12530/08 und Ausführungsbeispiel Betonstahl 1 bis 3

| Stahl-Nr. | Streckgrenze/ 0,2 Dehngrenze $R_e/R_{p0,2}$ | Zugfestigk. $R_m$ $MP_a$ | Bruch-dehnung $A_5$ % | Faltversuch mit Dorndurchmesser $d_1$ | Biegeversuch Vorbiegen 5d, ca. 170° Altern 100°/30 min/Luft Rückbiegen > 90° |
|---|---|---|---|---|---|
| St T-IV | ⩾ 490 | ⩾ 560 | ⩾ 10 | $d_1$ = 3,5 x Nenn-Ø 90° Biegewinkel | - |
| Beispiel 1: | 588 | 761 | 19,7 | keine Anrisse | keine Anrisse |
| Beispiel 2: | 563 | 690 | 18,2 | keine Anrisse | keine Anrisse |
| Beispiel 3: | 577 | 671 | 20,6 | keine Anrisse | keine Anrisse |

**Patentanspruch**

Verfahren zur Herstellung von Stählen, die aus der Walzhitze wärmebehandelt erhöhte Anforderungen an die Schweißeignung und an die Streubreite der Festigkeits- und Plastizitätseigenschaften erfüllen, wobei die zufällig und unkontrollierbar aus bzw. mit dem Stahlschrott oder anderen Ausgangsstoffen in die Schmelze gelangten Spuren- und Legierungselemente Cr, Cu, Mo und Ni entsprechend ihrem Legierungswirkwert auf die Streckgrenze und auf die Schweißeignung gezielt zur Reduzierung der normalen, technologisch vorgesehenen Legierungszugabe an Si und/oder Mn genutzt werden, dergestalt, daß nur die Differenzen zwischen dem bei der Einlaufanalyse festgestellten Gehalt an [Cr], [Cu], [Mo] oder [Ni] und dem statistischen Mittelwert $\bar{Cr}$, $\bar{Cu}$, $\bar{Mo}$ oder $\bar{Ni}$ des Elementes in den Einlaufanalysen der betreffenden Stahlmarke zur Reduzierung der Legierungszugabe von Si und Mn verwendet werden, indem sie mit den Beziehungen

$$Si = ([Cr] - \bar{Cr}) + ([Cu] - \bar{Cu}) + 2,9 ([Mo] - \bar{Mo}) + 0,6 [Ni] - \bar{Ni}),$$

$$Mn = 0,7 ([Cr] - \bar{Cr}) + 0,7 ([Cu] - \bar{Cu}) + 2,0 ([Mo] - \bar{Mo}) + 0,4 ([Ni] - \bar{Ni})$$

berechnet wird, wobei die folgenden statistischen Mittelwerte als Grenzwerte anzuwenden sind
$\bar{Cr} \leqq 0,15\,\%$, $\bar{Cu} \leqq 0,15\,\%$, $\bar{Mo} \leqq 0,01\,\%$ und $\bar{Ni} \leqq 0,07\,\%$,

und daß die Reduzierung von Si und Mn im Stahl nur bis zu den unteren Gehalten vorgenommen wird, die erfahrungsgemäß den vorgesehenen Beruhigungsgrad und ein fehlerfreies Gießen sichern, und bei noch darüber hinaus vorliegenden Restgehalten an Cr, Cu, Mo oder Ni der mittlere angestrebte Kohlenstoffgehalt der Stahlsorte um einen Betrag entsprechend den Beziehungen des Kohlenstoffäquivalents

$$C_{\bar{A}} = C + \frac{Mo}{4} + \frac{Cr}{5} + \frac{Mn}{6} + \frac{Cu}{13} + \frac{Ni}{15} + \frac{P}{2}$$

vermindert wird.

4

**Claim**

Process for the production of steels which, having been heat-treated from the rolling heat, fulfil increased demands on suitability for welding and the scatter spread of the properties of strength and plasticity, wherein the trace and alloying elements Cr, Cu, Mo and Ni, which have got into the smelt accidentally and uncontrollably from or with the steel scrap or other starting materials, are according to their effective alloying component utilised for the reduction of the normal, technologically provided alloying addition of Si and/or Mn with the targets of the elastic limit and the suitability for welding in such a manner that only the differences between the content of [Cr], [Cu], [Mo] or [Ni] ascertained during the intake analysis and the statistical mean value of $\bar{Cr}$, $\bar{Cu}$, $\bar{Mo}$ or $\bar{Ni}$ of the element in the intake analyses of the steel brand concerned are used for the reduction of the alloying addition of Si and Mn in that they are calculated by the relationships

$$Si = ([Cr] - \bar{Cr}) + ([Cu] - \bar{Cu}) + 2.9 ([Mo] - \bar{Mo}) + 0.6 [Ni] - \bar{Ni}) \text{ and}$$

$$Mn = 0.7 ([Cr] - \bar{Cr}) + 0.7 ([Cu] - \bar{Cu}) + 2.0 ([Mo] - \bar{Mo}) + 0.4 ([Ni] - \bar{Ni}),$$

wherein the following statistical mean values are to be applied as limit values

$$\bar{Cr} = 0.15 \%, \bar{Cu} = 0.15 \%, \bar{Mo} = 0.01 \% \text{ and } \bar{Ni} = 0.07 \%,$$

and that the reduction in Si and Mn in the steel is undertaken only to the lower contents which according to experience secure the envisaged degree of deoxidising and a faultless casting and, in the case of residual contents of Cr, Cu, Mo or Ni present still above that, the mean aimed-at carbon content of the steel sort is reduced by an amount according to the relationships of the carbon equivalent

$$C_{eq} = C + \frac{Mo}{4} + \frac{Cr}{5} + \frac{Mn}{6} + \frac{Cu}{13} + \frac{Ni}{15} + \frac{P}{2}.$$

**Revendication**

Procédé pour la fabrication d'aciers, qui après un traitement thermique à partir de la chaleur de laminage, répondent à des spécifications sévères en ce qui concerne l'aptitude au soudage et à la dispersion des caractéristiques de résistance et de plasticité, où des traces et éléments d'alliage Cr, Cu, Mo et Ni introduits dans la masse fondue, fortuitement ou de manière incontrôlée, le cas échéant avec des riblons d'acier ou d'autres substances de départ, sont utilisés en fonction de leur effet d'alliage sur la limite d'élasticité et l'aptitude au soudage, pour réduire l'addition de Si et/ou Mn prévue normalement sur le plan technologique de manière à n'utiliser que les différences entre la teneur en [Cr], [Cu], [Mo] ou [Ni] constatée lors de l'analyse initiale et la valeur moyenne statistique $\bar{Cr}$, $\bar{Cu}$, $\bar{Mo}$ ou $\bar{Ni}$ de l'élément d'addition dans les analyses initiales de la marque d'acier considérée pour réduire l'addition de Si et Mn, laquelle est calculée à l'aide des relations suivantes:

$$Si = ([Cr] - \bar{Cr}) + ([Cu] - \bar{Cu}) + 2.9 ([Mo] - \bar{Mo}) + 0.6 [Ni] - \bar{Ni}),$$

$$Mn = 0.7 ([Cr] - \bar{Cr}) + 0.7 ([Cu] - \bar{Cu}) + 2.0 ([Mo] - \bar{Mo}) + 0.4 ([Ni] - \bar{Ni})$$

où les valeurs moyennes statistiques suivantes sont à employer comme valeurs limites

$$\bar{Cr} \leq 0.15 \%, \bar{Cu} \leq 0.15 \%, \bar{Mo} \leq 0.01 \% \text{ et } \bar{Ni} \leq 0.07 \%;$$

et de telle manière que la réduction en Si et Mn dans l'acier atteigne au plus les teneurs inférieures qui assurent, d'après l'expérience, le degré de calmage prevu et une coulée sans défauts et pour des teneurs résiduelles encore supplémentaires en Cr, Cu, Mo ou Ni la teneur moyenne recherchée en carbone de la nuance d'acier est réduite conformément aux relations d'équivalence carbone

$$C_E = C + \frac{Mo}{4} + \frac{Cr}{5} + \frac{Mn}{6} + \frac{Cu}{13} + \frac{Ni}{15} + \frac{P}{2}.$$